# EUROPÄISCHE PATENTSCHRIFT

(11) **EP 1 684 059 B1**
(45) Veröffentlichungstag und Bekanntmachung des Hinweises auf die Patenterteilung: **24.06.2015**
(21) Anmeldenummer: 06001411.5
(22) Anmeldetag: 24.01.2006
(51) Int. Cl.: G01N 3/42, G01N 3/46

(54) **Vorrichtung zur hochgenauen Erzeugung und Messung von Kräften und Verschiebungen**
Device for highly accurate generation and measurement of forces and displacements
Dispositif pour générer et mesurer avec une haute précision des forces et des déplacements

(30) Priorität: 25.01.2005 DE 102005003830
(43) Veröffentlichungstag der Anmeldung: 26.07.2006
(73) Patentinhaber: ASMEC Advanced Surface Mechanics GmbH, 01454 Radeberg (DE)
(72) Erfinder: Chudoba, Thomas, Dr., 01099 Dresden (DE); Linss, Volker, Dr., 07743 Jena (DE)
(74) Vertreter: Rumrich, Gabriele

(56) Entgegenhaltungen:
- EP-A1- 0 867 708
- WO-A1-99/46576
- DE-A1- 3 721 525
- DE-A1- 4 220 510
- US-A- 4 400 970
- US-A- 4 435 976
- US-A- 4 841 764
- US-A- 6 050 139
- US-A1- 2002 062 678
- US-A1- 2004 011 119
- PATENT ABSTRACTS OF JAPAN Bd. 2003, Nr. 12, 5. Dezember 2003 (2003-12-05) -& JP 2004 020375 A (AKASHI CORP), 22. Januar 2004 (2004-01-22)
- PATENT ABSTRACTS OF JAPAN Bd. 2000, Nr. 19, 5. Juni 2001 (2001-06-05) -& JP 2001 050882 A (ERASUTRON:KK), 23. Februar 2001 (2001-02-23)

## Beschreibung

Die Erfindung bezieht sich auf eine Vorrichtung zur hochgenauen Erzeugung und Messung von Kräften und Verschiebungen gemäß dem Oberbegriff des Anspruchs 1. Die hochgenaue Erzeugung und Messung von Kräften und Verschiebungen entlang einer Achse findet üblicherweise Anwendung bei der Herstellung von Nanoindentern und Scratch- oder Verschleißtestern, Kräfte und Verschiebungen in solchen Geräten werden nach dem Stand der Technik auf verschiedene Weisen erzeugt, wobei in der Regel nur auf eine hohe Steifigkeit des bewegten Schaftes in Bewegungsrichtung geachtet wird. Kraft und/oder Verschiebung können im Wesentlichen elektrisch (elektrostatisch, kapazitiv), magnetisch, mechanisch oder mittels einer Kombination der vorgenannten Methoden erzeugt und/oder gemessen werden. Einfache Methoden zur Ermittlung von Verschiebungen und Kräften wie das optische Ablesen der Verschiebung einer Glasskala und die Verwendung einer Kraftmesszelle, wie sie im Patent US 5616857 beschrieben werden, sind nur für genügend große Wege und Kräfte geeignet. Eine andere Methode wird in DE 3738106 A1 beschrieben. Hierbei wird die Kraft durch den Stromfluss durch eine Spule erzeugt, die sich im Feld von Permanentmagneten befindet. Der elektrische Strom ist hierbei ein Maß für die erzeugte Kraft. Die Reproduzierbarkeit hängt allerdings von der Konstanz des Magnetfeldes der Permanentmagneten ab. Ein magnetisches System wird auch in DE 3408554 C2 verwendet, diesmal in Form eines Drehmagneten, der einen Hebelarm bewegt, der die Kraft auf ein Substrat überträgt. Der elektrische Strom durch den Magneten dient wiederum als Maß für die Kraft. Hierbei können allerdings die Lager die Genauigkeit und Reproduzierbarkeit der Kraftübertragung beeinflussen. Ebenfalls über einen Hebel wird die Kraft in DE 3128537 A1 erzeugt. Ein Hebelarm wird mit Hilfe eines Exzenters bewegt. Die Ermittlung der übertragenen Kraft erfolgt über einen Dehnmessstreifen, der an einem elastischen Teilstück des Kraftübertragungsarmes befestigt ist, während die Wegmessung durch eine Tastsonde am Schaft der Messeinrichtung erfolgt.

Dehnmessstreifen haben allerdings für kleine Signale ein schlechtes Signal/RauschVerhältnis. Eine bedeutend höhere Genauigkeit ist mit kapazitiven Messungen möglich, wie sie beispielsweise in US5576483 und US5661235 beschrieben sind. Weg- und Krafterzeugung und -messung erfolgen über elektrische Spannungen. Dabei wird die Änderung der Kapazität eines Kondensators bei veränderlichem Abstand seiner Platten bzw. die Veränderung des Abstandes der Platten bei veränderlicher angelegter Spannung genutzt. Dieses System kann nach US5661235 auch in mehr als einer Richtung zur Detektion von Kräften und Verschiebungen genutzt werden. Allerdings liegen die erzeugbaren Kräfte in der Größenordnung von 10mN, was einen erheblichen Nachteil darstellt. Des Weiteren wird mit Spannungen von mehreren 100 V gearbeitet, was die Gefahr des elektrischen Durchschlags birgt, wodurch die Krafterzeugung unbrauchbar werden würde. Des Weiteren muss die Aufhängung des Substrathalters elektrisch isolierend sein, damit die intern verwendete Spannung nicht nach außen gelangt. In US5067346 ist die Erzeugung und Messung von Kräften und Verschiebungen mittels einseitig eingespannter und nicht vorgespannter Blattfedern beschrieben. Nachteilig hierbei ist die geringe Steifigkeit in eine Richtung senkrecht zur erzeugten Kraft und Verschiebung. Aus DE 37 21 525A1 ist eine Mikrohärteprüfeinrichtung bekannt, bei welcher ein kraftübertragender Schaft an zwei übereinander in einem Kraftmessgehäuse angeordneten, durchbrochenen und an ihrem Umfang gehaltenen Membranfedern befestigt und in axialer Richtung geführt bewegbar ist. Die Membranfedern sind an ihren freien Seitenkanten wellenförmig ausgebildet.

In der Druckschrift WO99/46576 ist ein Testgerät und ein Verfahren zur Messung der Kratzfestigkeit eines Filmes oder einer Beschichtung bekannt, wobei ein kraftübertragender Schaft über eine Eindringkörperplatte 28 an elastischen Membranfedern 30 befestigt ist, die beidseitig an ihren langen Enden nicht einstellbar sind. Die elastischen Membranfedern sind an der Unterseite eines plattenartigen beweglichen Trägers befestigt, der wiederum mittels elastischer Membranfedern an der Unterseite eines feststehenden Trägers befestigt ist. Auch bei dieser Lösung ist die Vorspannung der Membranfedern, wenn überhaupt vorhanden, nicht einfach einstellbar. Dadurch besteht die Gefahr, dass das System bei den geringsten Erschütterungen in X-Richtung "schwingt", wodurch es leicht zur Verfälschung der Messergebnisse kommen kann. Eine hohe Steifigkeit des Systems wird durch den Einsatz der elastischen Membranfedern nicht gewährleistet.

In DE 42 20 510 A1 wird eine Vorrichtung zum Aufsetzen einer Messspitze auf ein Substrat beschrieben, wobei die Messspitze an einem vertikal bewegbaren Träger angeordnet ist. Der Träger ist zwischen zwei Blattfedern eingespannt, die an einem Grundkörper befestigt sind. Auch in EP 1042142 B 1 wird eine gattungsgemäße Vorrichtung beschrieben, bei welcher der Eindringkörper über einen an Blattfedern befestigten Eindringkörperhalter in einem Freiheitsgrad beweglich angeordnet ist. Gemäß JP 2004020375 ist ein Indenterschaft mittels einer Membranfeder in einer X-Richtung beweglich und zentrisch innerhalb eines ebenfalls mittels zweier Membranfedern in X-Richtung beweglichen Zylinders gelagert.

Auch bei den vier vorgenannt beschriebenen Lösungen ist eine definierte Vorspannkraft der Membranfedern bzw. Blattfedern nicht einstellbar, wodurch das System eine ungenügende Steifigkeit aufweist.

Aufgabe der Erfindung ist es, eine Vorrichtung zur hochgenauen Erzeugung und Messung von Kräften und Verschiebungen zu entwickeln, die bei einem relativ einfachen Aufbau eine hohe Steifigkeit senkrecht zur Achse, in welcher die Kräfte und Verschiebungen erzeugt werden, aufweist und eine hohe Zuverlässigkeit und Reproduzierbarkeit der erzeugten und gemessenen Kräfte und Verschiebungen gewährleistet.

Diese Aufgabe wird mit den Merkmalen des ersten Patentanspruchs gelöst. Vorteilhafte Ausgestaltungen ergeben sich aus den Unteransprüchen.

Bei der erfindungsgemäßen Vorrichtung zur Erzeugung und Messung von Kräften und Verschiebungen in einachsiger Richtung X, sowohl unter Druck als auch unter Zug, bei gleichzeitig hoher Steifigkeit in einer Achse Y senkrecht zu der Achse X, in welcher die Kräfte und Verschiebungen unter Verwendung eines kraftübertragenden Schaftes erzeugt werden und dem Schaft (3) eine Einrichtung zur Kraftmessung und/oder eine Einrichtung zur Wegmessung zugeordnet sind, ist der kraftübertragende Schaft an mindestens zwei, unter Vorspannung stehenden, beidseitig an ihren kurzen Enden eingespannten ersten Blattfedern befestigt, die in X-Richtung auslenkbar sind, wobei die Vorspannung der ersten Blattfedern in Richtung zur Achse Y erfolgt und über wenigstens ein erstes

Spannelement einstellbar ist und die ersten Blattfedern in einem geschlossenen, mit einem Bewegungselement gekoppelten Rahmen, gespannt sind, welcher wiederum durch wenigstens zwei sich gegenüberliegende Blattfedern an einem Gestell beweglich gelagert ist. Zur Realisierung der Bewegung in X-Richtung ist der Rahmen durch einen Verbindungsschaft mit einem Bewegungselement gekoppelt, welches den Rahmen sowohl in Zug- als auch in Schubrichtung bewegen kann. Bevorzugt ist das Bewegungselement als ein piezoelektrisches Element ausgebildet. Erfindungsgemäß weist ein erstes Spannelement einen ersten Klemmbügel und eine erste Spannplatte auf, zwischen welchen ein Ende der ersten Blattfeder mittels einer ersten Klemmschraube klemmbar ist und ist die erste Spannplatte mittels einer ersten Spannschraube in Y-Richtung gegen den Rahmen derart verstellbar, dass die geklemmte erste Blattfeder in ihrer Längsrichtung (Y-Richtung) vorgespannt wird.

Bevorzugt sind die ersten Blattfedern in einem geschlossenen Rahmen unter Vorspannung angelenkt, welcher wiederum in X-Richtung beweglich gelagert ist. Vorzugsweise erfolgt die Lagerung des Rahmens an zwei sich gegenüberliegenden Doppelpaaren zweiter Blattfedern. Alternativ ist es möglich, den Rahmen durch vier einseitig eingespannte dritte Blattfedern in X-Richtung beweglich aufzunehmen.

In einer weiteren Ausgestaltung der Erfindung ist dem kraftübertragenden Schaft eine Einrichtung zur Kraftmessung und/oder eine Einrichtung zur Wegmessung zugeordnet, wobei es möglich ist, die Ermittlung der Kraft über eine Wegmessung vorzunehmen. Die Einrichtung zur Kraftmessung ist dabei insbesondere ein erster LVDT und die Einrichtung zur Wegmessung ein zweiter LVDT.

Es ist ebenfalls möglich, die Kraft- und/oder Wegmessung optisch vorzunehmen. Gemäß einer weiteren Ausführungsform der Erfindung kann der kraftübertragende Schaft mit einer in der Achse X wirkenden Dämpfungseinheit gekoppelt werden. Diese kann ein Ölbad sein, in welches ein an dem kraftübertragenden Schaft starr befestigtes Dämpfungselement eintaucht oder eine Wirbelstrombremse, wobei ein mit dem kraftübertragenden Schaft starr verbundenes Aluminium- oder Kupferblech zwischen zwei Magneten positioniert ist.

Die Vorspannung der ersten Blattfedern erfolgt mittels erster Spannelemente in einer zur X-Richtung senkrecht stehenden Y-Richtung. Das erste Spannelement weist dazu einen ersten Klemmbügel und eine erste Spannplatte auf, zwischen welchen ein Ende einer ersten Blattfeder mittels einer ersten Klemmschraube festklemmbar ist. Die erste Spannplatte kann nun mittels einer ersten Spannschraube in Y-Richtung gegen den Rahmen verstellt (gespannt) werden, so dass die geklemmte erste Blattfeder in ihrer Längsrichtung (Y-Richtung) vorgespannt wird.

Das andere Ende der ersten Blattfeder wird z.B. mittels eines Klemmelementes nicht einstellbar am Rahmen befestigt.

Die Vorspannung der zweiten Blattfedern erfolgt z.B. mittels zweiter Spannelemente in einer zur X-Richtung senkrecht stehenden Y-Richtung gegen das Gestell oder gegen den Rahmen. Im letzteren Fall weist das zweite Spannelement einen zweiten Klemmbügel und eine zweite Spannplatte auf, zwischen welchen ein Ende einer zweiten Blattfeder mittels einer zweiten Klemmschraube festgeklemmt wird. Die zweite Spannplatte kann nun mittels einer zweiten Spannschraube in Y-Richtung gegen das Gestell verstellt (verspannt) werden, so dass die geklemmte zweite Blattfeder in ihrer Längsrichtung (Y-Richtung) vorgespannt wird.

Mit der vorliegenden Erfindung werden Kräfte und Verschiebungen in einer Richtung (X-Richtung) durch beidseitig eingespannte und in ihrer Längsrichtung (Y-Richtung) vorgespannte Blattfedern zuverlässig erzeugt und dabei gemessen. Die Erfindung lässt sich für die hochgenaue Erzeugung und Messung sehr kleiner aber auch für größere Kräfte und Verschiebungen auslegen. Des Weiteren können mehrere Vorrichtungen der Erfindung kombiniert und damit Kräfte und Verschiebungen in mehrere Richtungen erzeugt und gemessen werden. Durch die mechanische Erzeugung und Messung der Kräfte und Verschiebungen ist die Erfindung unanfällig gegen elektromagnetische Störungen, und die Substrathalter müssen nicht elektrisch isolierend sein. Ein wesentlicher Vorteil der Erfindung besteht darin, dass die Vorrichtung durch die Vorspannung der Blattfedern, in einer Richtung senkrecht zur erzeugten Kraft/Verschiebung (hier in Y-Richtung) sehr steif ist, so dass eine in dieser senkrechten Richtung wirkende Verschiebung nicht auftritt bzw. eine in dieser Richtung wirkende Kraft nicht zu einer Verschiebung führen kann.

Die Erfindung wird nachfolgend näher erläutert.

Es zeigen:
Fig. 1: Prinzipdarstellung der Erfindung mit allen wesentlichen Komponenten,
Fig. 2: Anwendungsbeispiel bei Aufhängung der Erfindung zur Erzeugung / Messung vertikaler Kräfte und Verschiebungen,
Fig. 3: Anwendungsbeispiel bei Aufhängung der Erfindung zur Erzeugung Messung horizontaler Kräfte und Verschiebungen,
Fig. 4: Anwendungsbeispiel einer Befestigung einer ersten Blattfeder am Rahmen in Seitenansicht,
Fig. 5: Darstellung gem. Fig. 4 in Draufsicht,
Fig. 6: Schnittdarstellung der Befestigung einer zweiten Blattfeder am Gestell,
Fig. 7: Darstellung gem. Fig. 6 in Draufsicht.

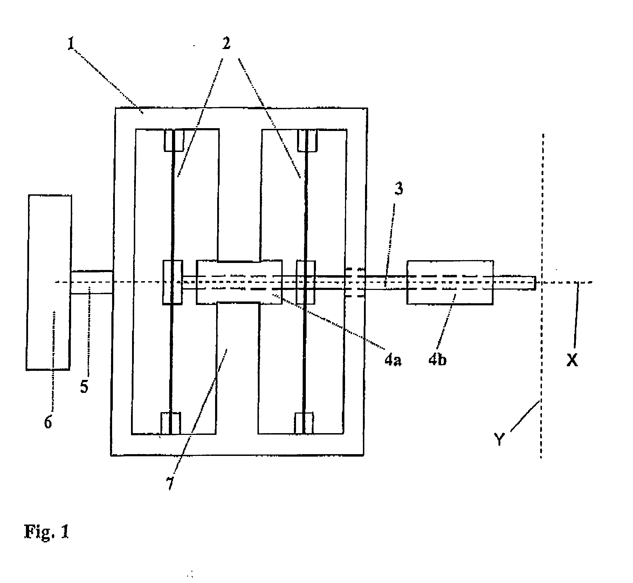

Zunächst soll anhand von Fig. 1 das Prinzip der Erfindung erläutert werden. In einem steifen geschlossenen Rahmen 1 sind mindestens ein Doppelpaar erster Blattfedern 2 an ihren kurzen Enden befestigt und in vertikaler Richtung gespannt. Diese Blattfedern 2 sind fest mit einem kraftübertragenden Schaft 3 verbunden, in dessen Richtung (X-Achse) die Kraft- bzw. Verschiebungserzeugung geschehen soll (sowohl Druck als auch Zug). Am kraftübertragenden Schaft 3 sind fest zwei Ferritkerne von LVDTs 4a, 4b befestigt. Ein LVDT 4a dient zur Kraftmessung und ist mit einer starren Halterung 7 mit dem geschlossenen Rahmen 1 verbunden. Der zweite LVDT 4b ist starr mit einem äußeren Referenzkörper verbunden, der als Bezugspunkt für die Messung der Verschiebung des Schaftes 3 dient. Über einen Verbindungsschaft 5 ist der Rahmen 1 mit einem piezoelektrischen Element 6 verbunden, welches den Rahmen 1 in Längsrichtung entlang der Achse X des Schaftes 3 hin und her bewegen kann. Es ist offensichtlich, dass der LVDT 4b die Position des Schaftes 3 mit hoher Präzision misst. Wirkt auf den Schaft 3 in dessen Längsrichtung eine Kraft, so kommt es zur Auslenkung der Blattfedern 2, was zur Verschiebung des Schaftes 3 in der X-Achse gegenüber dem LVDT 4a führt. Diese Auslenkung ist für genügend kleine Kräfte proportional zur Kraft, so dass das Signal des LVDT 4a auf die Kraft geeicht werden kann. In Richtung der Längserstreckung der ersten Blattfedern 2, die senkrecht zur Achse X liegt, ist in einer Achse Y eine hohe Steifigkeit des Schaftes gewährleistet.

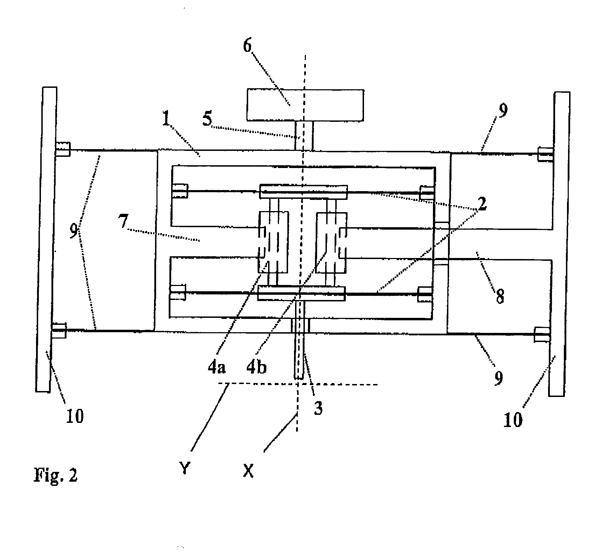

Ein Ausführungsbeispiel der Erfindung ist in Fig. 2 zu sehen. Der geschlossene Rahmen 1 ist beweglich in Richtung der Achse X über vorgespannte zweite Blattfedern 9 an einem Gestell 10 aufgehängt. Der LVDT 4a zur Kraftmessung ist wiederum über eine starre Verbindung 7 fest am Rahmen 1 befestigt, der LVDT 4b zur Verschiebungsmessung entlang der Achse X ist über eine starre Verbindung 8 am Gestell 10 fixiert. In dieser Ausführung kann am Schaft 3 beispielsweise eine Indenterspitze befestigt sein, wobei deren Verschiebung in vertikaler Richtung und die auf sie wirkende Kraft gemessen werden. Die Verschiebung wird dabei über ein piezoelektrisches Element 6 bewerkstelligt, welchen den Rahmen 1 und mit ihm den Schaft 3 in Richtung der X-Achse bewegt. Ebenso kann am Schaft 3 ein Draht, eine Faser oder ähnliche Körper für einen Zugversuch eingespannt sein. In diesem Falle bewegt das aktive piezoelektrische Element 6 den Rahmen 1 nach oben. Durch die Halterung des Schaftes 3 an den Blattfedern 2 und durch die Halterung des Rahmens an den zweiten Blattfedern 9 wird eine Verschiebung des Schaftes 3 in lateraler (Y) Richtung verhindert bzw. sehr stark eingeschränkt.

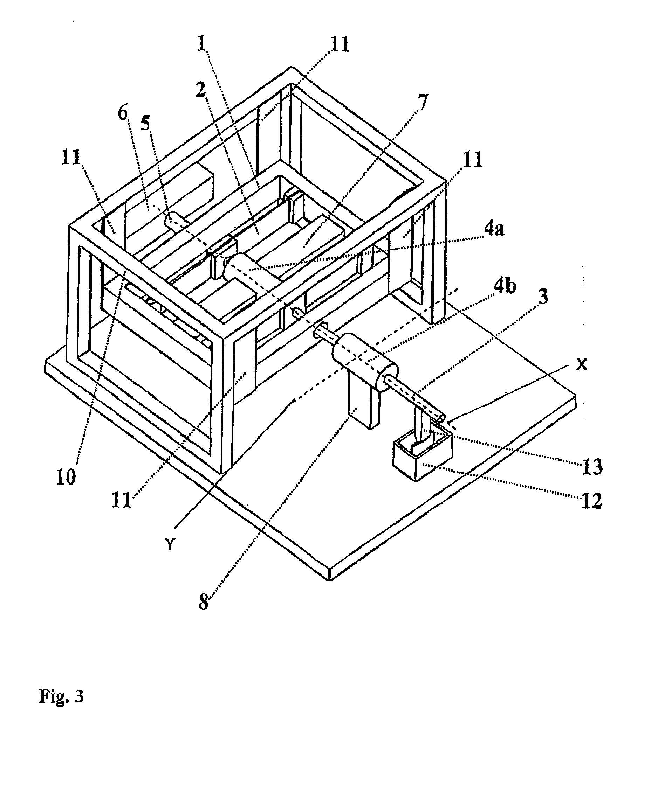

Ein weiteres Ausführungsbeispiel ist in Fig. 3 zu sehen. Hierbei erfolgt die Erzeugung und Messung der Kraft und Verschiebung in horizontaler Richtung (Achse X), wobei in Richtung der Achse Y eine hohe Steifigkeit zu verzeichnen ist. In diesem Beispiel ist der Rahmen 1 über vier dritte Blattfedern 11 an einem Gestell 10 aufgehängt, und der Schaft 3 hat seine Längsrichtung in horizontaler Lage. Der erste LVDT 4a zur Kraftmessung ist wiederum über eine starre Verbindung 7 am Rahmen 1 befestigt. Der zweite LVDT 4b zur Verschiebungsmessung ist über eine starre Verbindung 8 an einer Grundplatte angebracht, die wiederum das Gestell 10 hält. In diesem Ausführungsbeispiel ist am Schaft 3 noch ein Dämpfungselement 13 fixiert, welches in eine Dämpfungseinheit in Form eines Ölbades 12 eintaucht und Schwingungen in Richtung der Längsachse des Schaftes 3 dämpft. (Eine solche Dämpfung kann auch bei dem Beispiel nach Fig. 2 angebracht werden). Sollten diese Schwingungen beabsichtigt sein und über das aktive piezoelektrische Element 6 erzeugt werden, kann die Dämpfungseinheit entfernt werden. Der Schaft 3 kann in die Richtung seiner Längsachse sowohl hin als auch zurück bewegt werden. Ebenso können Kräfte in Druck- als auch in Zugrichtung erzeugt werden. In Richtung der Achse Y ist eine hohe Steifigkeit gewährleistet.

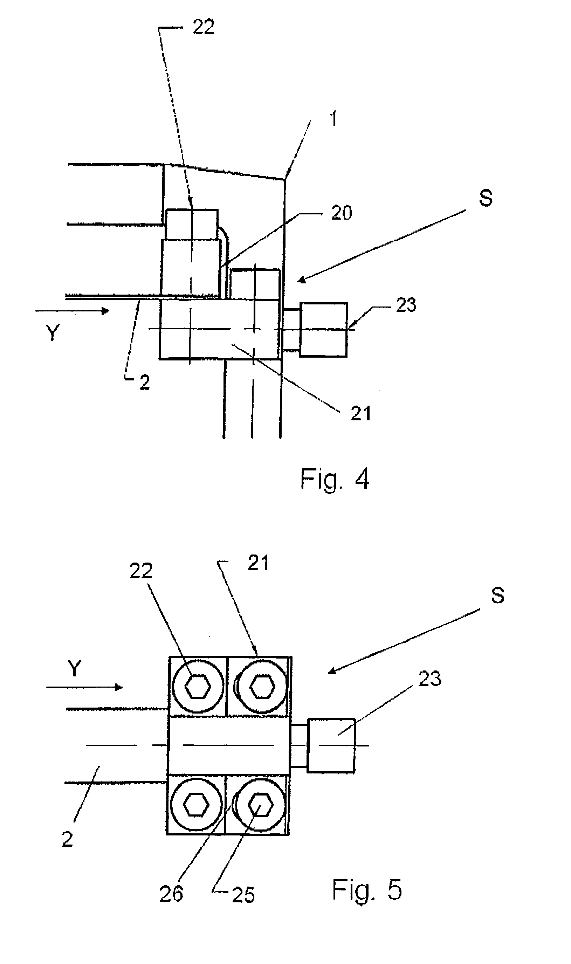

Figur 4 zeigt ein Anwendungsbeispiel einer Befestigung einer ersten Blattfeder am Rahmen in Seitenansicht und Fig. 5 in der Draufsicht.

Das erste Spannelement S, mit welchem die Vorspannung einer ersten Blattfeder 2 in Y-Richtung erzeugbar ist, besteht im wesentlichen aus einem ersten Klemmbügel 20, einer ersten Spannplatte 21, einer ersten Klemmschraube 22 und einer ersten Spannschraube 23. Ein Ende einer ersten Blattfeder 2 wird zwischen dem ersten Klemmbügel 20 und der ersten Spannplatte 21 mittels der ersten Klemmschraube 22 festgeklemmt. Mittels der ersten Spannschraube 23 wird die Spannplatte 21 gegen den Rahmen 1 verspannt und somit bei Anziehen der ersten Spannschraube 23 die erste Blattfeder 2 in ihrer Längsrichtung (Y-Richtung) vorgespannt. Die erste Spannplatte 21 kann nun mittels einer ersten Feststellschraube 25 gegenüber dem Rahmen 1 gestellfest positioniert werden. Zur Gewährleistung der Verschiebung der ersten Spannplatte 21 weist diese ein erstes Langloch 26 auf, durch welches die erste Feststellschraube 25 greift.

Das andere nicht dargestellte Ende der ersten Blattfeder 2 wird gestellfest am Rahmen 1 befestigt.

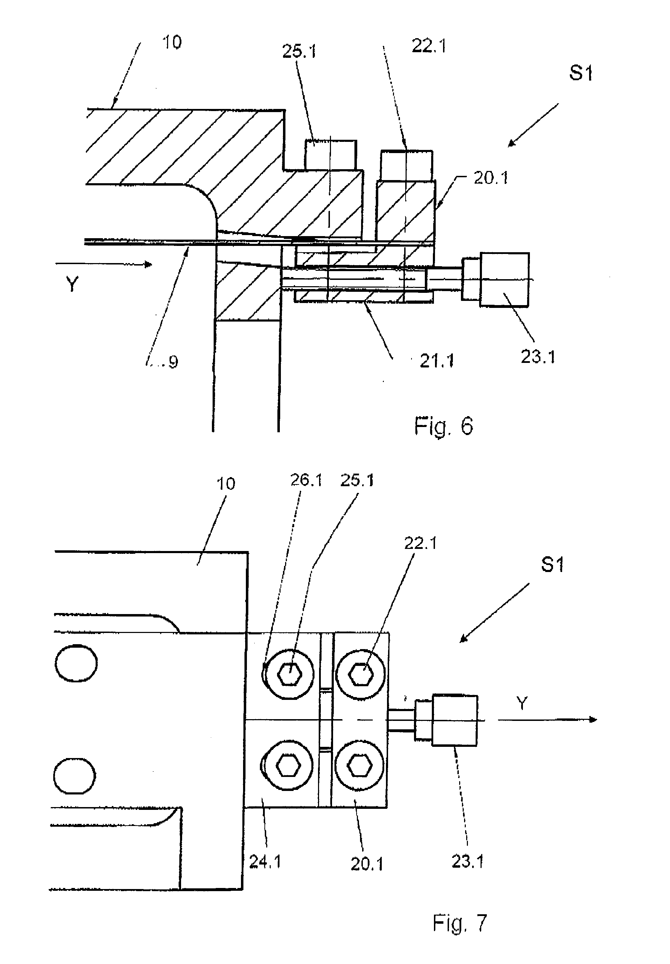

In Figur 6 und 7 ist ein Anwendungsbeispiel einer Befestigung einer zweiten Blattfeder 9 am Gestell 10 in einer Schnittdarstellung und in der Draufsicht dargestellt.

Das zweite Spannelement S1, mit welchem die Vorspannung einer zweiten Blattfeder 9 in Y-Richtung erzeugbar ist, besteht ähnlich wie die vorgenannte Ausführung im wesentlichen aus einem zweiten Klemmbügel 20.1, einer zweiten Spannplatte 21.1, einer zweiten Klemmschraube 22.1 und einer zweiten Spannschraube 23.1. Ein Ende der zweiten Blattfeder 9 wird zwischen dem zweiten Klemmbügel 20.1 und der zweiten Spannplatte 21.1 mittels der zweiten Klemmschraube 22.1 festgeklemmt. Mittels der zweiten Spannschraube 23.1 wird die zweite Spannplatte 21.1 gegen das Gestell 10 verspannt und somit bei Anziehen der zweiten Spannschraube 23.1 die zweite Blattfeder 9 in ihrer Längsrichtung (Y-Richtung) vorgespannt. Die zweite Spannplatte 21.1 kann nun mittels einer zweiten Feststellschraube 25.1 gegenüber dem Gestell 10 gestellfest festgeschraubt werden. Zur Gewährleistung der Verschiebung der zweiten Spannplatte 21.1 weist diese ein zweites Langloch 26.1 auf, durch welches die zweite Feststellschraube 25.1 greift. Das andere nicht dargestellte Ende der zweiten Blattfeder wird gestellfest am Rahmen 1 befestigt.

Neben den beschriebenen Ausführungsbeispielen sind auch andere Anordnungen und Halterungen sowie Spannelemente denkbar, wobei das erfindungsgemäße Prinzip zur Kraft- und Verschiebungsmessung aber dasselbe ist. So kann beispielsweise die Anzahl der Blattfedern variieren oder die Aufhängung anders (z.B. Spiralfedern) erfolgen.

## Patentansprüche

1. Vorrichtung zur Erzeugung und Messung von Kräften und Verschiebungen in einachsiger Richtung (X), sowohl unter Druck als auch unter Zug, bei gleichzeitig hoher Steifigkeit in einer Achse (Y) senkrecht zu der Achse (X), in welcher die Kräfte und Verschiebungen unter Verwendung eines kraftübertragenden Schaftes (3) erzeugt werden und dem Schaft (3) eine Einrichtung zur Kraftmessung und/oder eine Einrichtung zur Wegmessung zugeordnet sind, wobei
- der kraftübertragende Schaft (3) an mindestens zwei, unter Vorspannung stehenden, beidseitig an ihren kurzen Enden eingespannten ersten Blattfedern (2) befestigt ist und
- die ersten Blattfedern (2) in X-Richtung auslenkbar sind,
- die Vorspannung der ersten Blattfedern (2) in ihrer Längsrichtung (Y) erfolgt und über wenigstens ein erstes Spannelement (S) einstellbar ist und
- die ersten Blattfedern (2) in einem geschlossenen, mit einem Bewegungselement gekoppelten Rahmen (1) gespannt sind, welcher wiederum durch wenigstens zwei sich gegenüberliegende Blattfedern (9) an einem Gestell (10) beweglich gelagert ist,
- wobei der Rahmen (1) über einen Verbindungsschaft (5) mit dem Bewegungselement verbunden ist, durch welches der Rahmen (1) in Längsrichtung der Achse (X) des Schaftes (3) auslenkbar ist,
**dadurch gekennzeichnet, dass**
- das erste Spannelement (S) einen ersten Klemmbügel (20) und eine erste Spannplatte (21) aufweist, zwischen welchen ein Ende einer ersten Blattfeder (2) mittels einer ersten Klemmschraube (22) klemmbar ist und dass die erste Spannplatte (21) mittels einer ersten Spannschraube (23) in Y-Richtung gegen den Rahmen (1) verstellbar ist derart, dass die geklemmte erste Blattfeder (2) in ihrer Längsrichtung (Y-Richtung) vorgespannt wird.

2. Vorrichtung nach Anspruch 1, **dadurch gekennzeichnet, dass** der kraftübertragende Schaft (3) an einem Doppelpaar beidseitig eingespannter erster Blattfedern (2) befestigt ist.

3. Vorrichtung nach Anspruche 1 oder 2, **dadurch gekennzeichnet, dass** der Rahmen (1) an zwei Doppelpaaren zweiter Blattfedern (9) gelagert ist.

4. Vorrichtung nach einem der Ansprüche 1 bis 3, **dadurch gekennzeichnet, dass** die zweiten Blattfedern (9) und der Rahmen (1) in X-Richtung auslenkbar sind.

5. Vorrichtung nach einem der Ansprüche 1 bis 4, **dadurch gekennzeichnet, dass** der Rahmen (1) durch vier einseitig eingespannte dritte Blattfedern (11) gelagert ist.

6. Vorrichtung nach einem der Ansprüche 1 bis 5, **dadurch gekennzeichnet, dass** die dritten Blattfedern (11) in X-Richtung auslenkbar sind.

7. Vorrichtung nach einem der Ansprüche 1 bis 6, **dadurch gekennzeichnet, dass** das Bewegungselement ein piezoelektrisches Element (6) ist.

8. Vorrichtung nach einem der Ansprüche 1 bis 7, **dadurch gekennzeichnet, dass** die Ermittlung der Kraft über eine Wegmessung erfolgt.

9. Vorrichtung nach einem der Ansprüche 1 bis 8, **dadurch gekennzeichnet, dass** die Einrichtung zur Kraftmessung ein erster LVDT (4a) und die Einrichtung zur Wegmessung ein zweiter LVDT (4b) ist.

10. Vorrichtung nach einem der Ansprüche 1 bis 9, **dadurch gekennzeichnet, dass** die Kraft- und/oder Wegmessung optisch erfolgt.

11. Vorrichtung nach Anspruch 1, **dadurch gekennzeichnet, dass** das andere Ende einer ersten Blattfeder (2) mit Klemmelementen am Rahmen (1) befestigt ist.

12. Vorrichtung nach Anspruch 3, **dadurch gekennzeichnet, dass** die Vorspannung der zweiten Blattfedern (9) mittels zweiter Spannelemente (S1) in einer zur X-Richtung senkrecht stehenden Y-Richtung einstellbar ist.

13. Vorrichtung nach Anspruch 12, **dadurch gekennzeichnet, dass** das zweite Spannelement (S1) einen zweiten Klemmbügel (20.1) und eine zweite Spannplatte (21.1) aufweist, zwischen welchen ein Ende einer zweiten Blattfeder (9) mittels einer zweiten Klemmschraube (22.1) klemmbar ist und dass die zweite Spannplatte (21.1) mittels einer zweiten Spannschraube (23.1) in Y-Richtung gegen das Gestell (10) verstellbar ist derart, dass die geklemmte zweite Blattfeder (9) in ihrer Längsrichtung (Y-Richtung) vorgespannt wird.

14. Vorrichtung nach eine Anspruch 12 oder 13, **dadurch gekennzeichnet, dass** das andere Ende einer zweiten Blattfeder (9) mittels zweiter Klemmelemente am Rahmen (1) befestigt ist.

## Claims

1. A device for generating and measuring forces and displacements in a monoaxial direction (X), both under pressure and also under traction, with simultaneous high rigidity in an axis (Y) perpendicular to the axis (X), in which the forces and displacements are generated using a force-transmitting shaft (3) and a unit for force measurement and/or a unit for distance measurement are assigned to the shaft (3), wherein
- the force-transmitting shaft (3) is fastened to at least two first leaf springs (2), which are under pre-tension and are both clamped on their short ends, and
- the first leaf springs (2) are deflectable in the X direction,
- the pre-tension of the first leaf springs (2) takes place in their longitudinal direction (Y) and is settable via at least one first tensioning element (S), and
- the first leaf springs (2) are tensioned in a closed frame (1), which is coupled to a movement element, and which is in turn mounted so it is movable on a framework (10) by at least two opposing leaf springs (9),
- wherein the frame (1) is connected via a connecting shaft (5) to the movement element, by which the frame (1) is deflectable in the longitudinal direction of the axis (X) of the shaft (3),
**characterized in that**
- the first tensioning element (S) has a first clamping bracket (20) and a first tensioning plate (21), between which one end of a first leaf spring (2) can be clamped by means of a first clamping screw (22), and the first tensioning plate (21) is adjustable by means of a first tensioning screw (23) in the Y direction in relation to the frame (1) such that the clamped first leaf spring (2) is pre-tensioned in its longitudinal direction (Y direction).

2. The device according to Claim 1, **characterized in that** the force-transmitting shaft (3) is fastened on a double pair of first leaf springs (2), which are clamped on both sides.

3. The device according to Claim 1 or 2, **characterized in that** the frame (2) is mounted on two double pairs of second leaf springs (9).

4. The device according to any one of Claims 1 to 3, **characterized in that** the second leaf springs (9) and the frame (1) are deflectable in the X direction.

5. The device according to any one of Claims 1 to 4, **characterized in that** the frame (1) is mounted by four third leaf springs (11), which are clamped on one side.

6. The device according to any one of Claims 1 to 5, **characterized in that** the third leaf springs (11) are deflectable in the X direction.

7. The device according to any one of Claims 1 to 6, **characterized in that** the movement element is a piezoelectric element (6).

8. The device according to any one of Claims 1 to 7, **characterized in that** the determination of the force is performed via a distance measurement.

9. The device according to any one of Claims 1 to 8, **characterized in that** the unit for force measurement is a first LVDT (4a) and the unit for distance measurement is a second LVDT (4b).

10. The device according to any one of Claims 1 to 9, **characterized in that** the force and/or distance measurement is performed optically.

11. The device according to Claim 1, **characterized in that** the other end of a first leaf spring (2) is fastened using clamping elements on the frame (1).

12. The device according to Claim 3, **characterized in that** the pre-tension of the second leaf springs (9) is settable by means of second tensioning elements (S1) in a Y direction perpendicular to the X direction.

13. The device according to Claim 12, **characterized in that** the second tensioning element (S1) has a second clamping bracket (20.1) and a second tensioning plate (21.1), between which one end of a second leaf spring (9) can be clamped by means of a second clamping screw (22.1), and the second tensioning plate (21.1) is adjustable by means of a second tensioning screw (23.1) in the Y direction in relation to the framework (10) such that the clamped second leaf spring (9) is pre-tensioned in its longitudinal direction (Y direction).

14. The device according to Claim 12 or 13, **characterized in that** the other end of a second leaf spring (9) is fastened by means of second clamping elements on the frame (1).

## Revendications

1. Dispositif pour produire et mesurer des forces et des déplacements dans une direction sur un axe (X), sous l'effet d'une pression aussi bien que d'une traction, avec simultanément une rigidité élevée sur un axe (Y) perpendiculaire à l'axe (X), dans lequel les forces et déplacements sont produits en utilisant un arbre transmettant une force (3) et l'arbre (3) est associé à un dispositif pour la mesure de la force et/ou un dispositif pour la mesure de la distance, dans lequel
- l'arbre transmettant une force (3) est fixé sur au moins deux premiers ressorts à lames (2) soumis à une précontrainte et serrés des deux côtés à leurs extrémités courtes, et
- les premiers ressorts à lames (2) peuvent être déviés dans la direction X,
- la précontrainte des premiers ressorts à lames (2) s'exerce dans leur sens longitudinal (Y) et peut être réglée à l'aide d'au moins un premier élément de mise en tension (S) et
- les premiers ressorts à lames (2) sont serrés dans un cadre (1) fermé couplé à l'élément de déplacement, qui est supporté à son tour de façon mobile par au moins deux ressorts à lames (9) se faisant face sur un bâti (10),
- le cadre (1) étant relié par un arbre de liaison (5) avec l'élément de déplacement par lequel le cadre (1) peut être dévié dans le sens longitudinal de l'axe (X) de l'arbre (3),
**caractérisé en ce que** le premier élément de mise en tension (S) présente un premier étrier de serrage (20) et une première plaque de mise en tension (21) entre lesquels une extrémité d'un premier ressort à lames (2) peut être serrée au moyen d'une première vis de serrage (22) et **en ce que** la première plaque de mise en tension (21) peut être réglée au moyen d'une première vis de mise en tension (23) dans la direction Y vers le cadre (1) de telle sorte que le premier ressort à lames (2) serré soit précontraint dans son sens longitudinal (direction Y).

2. Dispositif selon la revendication 1, **caractérisé en ce que** l'arbre transmettant une force (3) est fixé sur une double paire de premiers ressorts à lames (2) serrés des deux côtés.

3. Dispositif selon la revendication 1 ou 2, **caractérisé en ce que** le cadre (1) est supporté sur deux doubles paires de deuxièmes ressorts à lames (9).

4. Dispositif selon l'une des revendications 1 à 3, **caractérisé en ce que** les deuxièmes ressorts à lames (9) et le cadre (1) peuvent être déviés dans la direction X.

5. Dispositif selon l'une des revendications 1 à 4, **caractérisé en ce que** le cadre (1) est supporté par quatre troisièmes ressorts à lames (11) serrés d'un seul côté.

6. Dispositif selon l'une des revendications 1 à 5, **caractérisé en ce que** les troisièmes ressorts à lames (11) peuvent être déviés dans la direction X.

7. Dispositif selon l'une des revendications 1 à 6, **caractérisé en ce que** l'élément de déplacement est un élément piézoélectrique (6).

8. Dispositif selon l'une des revendications 1 à 7, **caractérisé en ce que** la force est déterminée à l'aide d'une mesure de la distance.

9. Dispositif selon l'une des revendications 1 à 8, **caractérisé en ce que** le dispositif pour la mesure de la force est un premier LVDT (4a) et le dispositif pour la mesure de la distance est un deuxième LVDT (4b).

10. Dispositif selon l'une des revendications 1 à 9, **caractérisé en ce que** la mesure de la force et/ou de la distance s'effectue de façon optique.

11. Dispositif selon la revendication 1, **caractérisé en ce que** l'autre extrémité d'un premier ressort à lames (2) est fixée au cadre (1) par des éléments de serrage.

12. Dispositif selon la revendication 3, **caractérisé en ce que** la précontrainte des deuxièmes ressorts à lames (9) est réglable au moyen de deuxièmes éléments de mise en tension (S1) dans une direction Y perpendiculaire à la direction X.

13. Dispositif selon la revendication 12, **caractérisé en ce que** le deuxième élément de mise en tension (S1) présente un deuxième étrier de serrage (20.1) et une deuxième plaque de mise en tension (21.1) entre lesquels une extrémité d'un deuxième ressort à lames (9) peut être serrée au moyen d'une deuxième vis de serrage (22.1) et **en ce que** la deuxième plaque de mise en tension (21.1) est réglable au moyen d'une deuxième vis de mise en tension (23.1) dans le sens de l'axe Y vers le bâti (10) de telle sorte que le deuxième ressort à lames (9) serré soit précontraint dans son sens longitudinal (direction Y).

14. Dispositif selon l'une des revendications 12 ou 13, **caractérisé en ce que** l'autre extrémité d'un deuxième ressort à lames (9) est fixée au cadre (1) au moyen de deuxièmes éléments de serrage.
